# EUROPEAN PATENT APPLICATION

(11) **EP 4 471 098 A1**
(43) Date of publication of application: **04.12.2024**
(21) Application number: 23915202.8
(22) Date of filing: 07.09.2023
(51) Int. Cl.: C09C 1/48, C08K 3/04, C08L 21/00

(54) **MODIFIED RECYCLED CARBON BLACK, METHOD FOR PRODUCING MODIFIED RECYCLED CARBON BLACK, AND RUBBER COMPOSITION**

(30) Priority: 17.04.2023 JP 2023067333
(71) Applicant: Tokai Carbon Co., Ltd., Minato-ku Tokyo 107-8636 (JP)
(72) Inventor: KURISU, Kengo, Tokyo 107-8636 (JP); KIRIYAMA, Daishi, Tokyo 107-8636 (JP)
(74) Representative: Müller-Boré & Partner Patentanwälte PartG mbB
(86) International application number: PCT/JP2023/032620
(87) International publication number: WO 2024/218991

(57) **Abstract**

A modified recycled carbon black having a N₂SA of 50 m²/g or more and 250 m²/g or less, and having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less. The present invention can provide a recycled carbon black having strong bonding with rubber components and having high reinforcing properties for rubber products.

## Description

### TECHNICAL FIELD

The present invention relates to recycled carbon black with a modified surface condition, a method for producing the same, and a rubber composition containing the same.

### BACKGROUND ART

For reduction in the load on the global environment in recent years, efforts such as carbon neutral and sustainability are being vigorously made. In the field of carbon black, as part of sustainability activities, use of recycled carbon black obtained by pyrolyzing rubber products such as waste tires is being studied.

As a method for producing recycled carbon black by pyrolysis of waste tires, for example, Patent Literature 1 discloses circulating nitrogen gas and pyrolyzing waste tires at about 500°C.

### CITATION LIST

### PATENT LITERATURE

Patent Literature 1: Japanese Patent No. 5813985
Patent Literature 2: WO 2013/095145 A1

### SUMMARY OF INVENTION

### Technical Problem

However, to the surface of the recycled carbon black obtained by pyrolyzing rubber products such as waste tires, rubber residuals with a rubber carbide as a main component adheres, and these rubber residuals, when mixed with a rubber composition, hinder adsorption of the recycled carbon black to rubber components.

Thus, the recycled carbon black unfortunately has low reinforcing properties for rubber products due to its weak bonding with rubber components.

Thus, an object of the present invention is to provide a recycled carbon black having strong bonding with rubber components and having high reinforcing properties for rubber products.

### Solution to Problem

The inventors of the present invention, after earnest studies,
have found that an oxidative gas is brought into contact with a recycled carbon black under heating, thereby oxidizing and removing rubber residuals with a rubber carbide adhering to the surface of the recycled carbon black as a main component, thereby the surface of the recycled carbon black can be exposed, thereby bonding with rubber components can be strengthened, and thus reinforcing properties for rubber products can be increased.

The inventors of the present invention have also found the following. That is,
when the rubber residuals adhering to the surface of the recycled carbon black are removed by oxidative decomposition, if the oxidation of the recycled carbon black itself proceeds too much, bonding with rubber components becomes high, but the specific surface area becomes too large and the cohesive force of the recycled carbon black becomes too large, thus making dispersion in rubber poor and not increasing rubber reinforcing properties. However, it has been found that a hydrocarbon is brought into contact with the recycled carbon black, which has a larger specific surface area by contact with the oxidative gas, under heating to produce a carbide, and pores generated on the surface of the recycled carbon black are filled with the carbide, thereby adjusting the specific surface area to reduce the cohesive force, and reinforcing properties for rubber products can be increased to complete the present invention.

That is, the present invention provides
(1) A modified recycled carbon black
   having a N₂SA of 50 m²/g or more and 250 m²/g or less, and
   having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less.
(2) The modified recycled carbon black according to (1), in which an ash content is 3.0 or more and 50.0% or less.
(3) A modified recycled carbon black obtained by performing a step of bringing an oxidative gas into contact with a rubber carbide-adhering recycled carbon black in a reactor heated at 600°C or higher and 1,400°C or lower,
   having a N₂SA of 50 m²/g or more and 250 m²/g or less, and
   having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less.
(4) A modified recycled carbon black obtained by performing a step of bringing an oxidative gas into contact with a rubber carbide-adhering recycled carbon black in a reactor heated at 600°C or higher and 1,400°C or lower and a step of bringing a hydrocarbon gas into contact with the rubber carbide-adhering recycled carbon black in the reactor,
   having a N₂SA of 50 m²/g or more and 250 m²/g or less, and
   having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less.
(5) The modified recycled carbon black according to (3) or (4), in which the rubber carbide-adhering recycled carbon black is a carbon black having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more and 200 or less.
(6) A method for producing a modified recycled carbon black, the method comprising a step of bringing an oxidative gas into contact with a rubber carbide-adhering recycled carbon black in a reactor heated at 600°C or higher and 1,400°C or lower.
(7) A method for producing a modified recycled carbon black, the method comprising a step of bringing an oxidative gas into contact with a rubber carbide-adhering recycled carbon black in a reactor heated at 600°C or higher and 1,400°C or lower and a step of bringing a hydrocarbon gas into contact with the rubber carbide-adhering recycled carbon black in the reactor.
(8) The method for producing a modified recycled carbon black according to (7), in which, after performing the step of bringing an oxidative gas into contact, the step of bringing a hydrocarbon gas into contact is performed.
(9) The method for producing a modified recycled carbon black according to (6) or (7), in which the rubber carbide-adhering recycled carbon black is a carbon black having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more and 200 or less.
(10) A rubber composition comprising:
   a rubber component; and
   the modified recycled carbon black according to (1) in an amount of 1 part by mass or more and 100 parts by mass or less with respect to 100 parts by mass of the rubber component.

### Advantageous Effect of Invention

The present invention can provide a recycled carbon black having strong bonding with rubber components and having high reinforcing properties for rubber products.

### BRIEF DESCRIPTION OF DRAWINGS

FIG. 1 is an illustrative diagram of a method for calculating a G band intensity with a D band intensity being 100 in a modified recycled carbon black of the present invention.
FIG. 2 is a diagram for illustrating a method for measuring a Raman spectrum in the modified recycled carbon black of the present invention.
FIG. 3 is a Raman spectrum of a form example of a recycled carbon black before modification.
FIG. 4 is a schematic diagram of a form example of a fluidized-bed reactor.
FIG. 5 is a diagram of a relation between a dynamic storage modulus (E') and a tensile stress (M300) of examples, comparative examples, reference examples, and rCB1.
FIG. 6A is an electron micrograph of unused carbon black (SEAST6). Note that the hollow part shows a scale.
FIG. 6B is an electron micrograph of a recycled carbon black before modification (rCB before modification rCB1). Note that the hollow part shows a scale.
FIG. 6C is an electron micrograph of a modified recycled carbon black (modified rCB Example 7). Note that the hollow part shows a scale.

### DESCRIPTION OF EMBODIMENTS

The following describes an embodiment of the present invention in detail with reference to the accompanying drawings as appropriate. The following detailed description of the present invention is an example of the embodiment, and the present invention is not to be construed as limited in any way to the present embodiment.

The modified recycled carbon black of the present invention
has an N₂SA of 50 m²/g or more and 250 m²/g or less, and
has, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less.

The modified recycled carbon black of the present invention is one in which the surface of a recycled carbon black obtained by pyrolyzing rubber products such as waste tires is modified. More specifically, the modified recycled carbon black of the present invention is one in which all or part of rubber residuals with a rubber carbide adhering to the surface of the recycled carbon black obtained by pyrolyzing rubber products such as waste tires as a main component are removed.

The recycled carbon black with the rubber carbide adhering to its surface has, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more.

In contrast to such a recycled carbon black with the rubber carbide adhering to its surface, the modified recycled carbon black of the present invention, from which the rubber residuals with the rubber carbide adhering to the surface as a main component have been removed, has, in a Raman spectrum obtained by performing measurement at an excitation wavelength of 532 nm by laser Raman spectroscopy, a peak intensity of a peak (the G band) having a peak top in a range of 1,580 ± 20 cm⁻¹ with the peak intensity of a peak (the D band) having a peak top in a range of 1,350 ± 20 cm⁻¹ being 100 (hereinafter also referred to as the G band intensity with the D band intensity being 100) of 84 or more and 111 or less. By the G band intensity, with the D band intensity being 100, of the recycled carbon black being within the above range, the rubber residuals adhering to the surface of the recycled carbon black are absent or few, increasing the bonding of the recycled carbon black with a rubber component, thus increasing reinforcing properties for rubber products. The G band intensity with the D band intensity being 100 is preferably 85 or more and 110 or less from the viewpoint of ensuring moderate bonding strength with rubber on the surface of the recycled carbon black and more preferably 86 or more and 109 or less from the viewpoint of ensuring stronger bonding strength. On the other hand, if the G band intensity, with the D band intensity being 100, of the recycled carbon black exceeds the above range, many rubber residuals adhere to the surface of the recycled carbon black, thus reducing the bonding of the recycled carbon black with the rubber component. If it is less than the above range, there are many defects in the graphite structure on the carbon black surface, and the surface activity is too high, which promotes cohesion of the carbon black in rubber and reduces reinforcing properties for rubber.

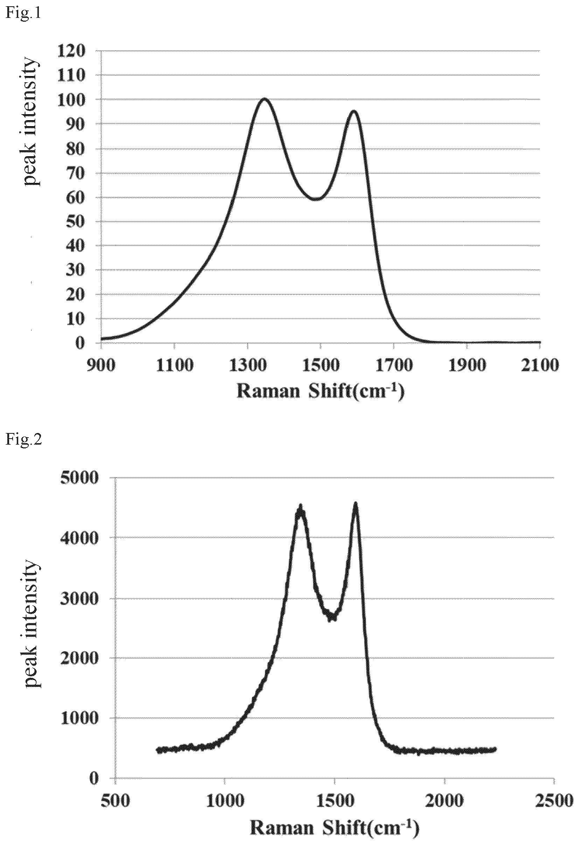

FIG. 1 is a diagram of a method for calculating the G band intensity with the D band intensity being 100 in the modified recycled carbon black of the present invention.

As illustrated in FIG. 1, for the modified recycled carbon black of the present invention, in a Raman spectrum obtained by performing measurement at an excitation wavelength of 532 nm by laser Raman spectroscopy, a peak (the D band) having a peak top in a range of 1,350 ± 20 cm⁻¹ and a peak (the G band) having a peak top in a range of 1,580 ± 20 cm⁻¹ are detected.

From the value of the peak intensity of the D band and the value of the peak intensity of the G band, the peak intensity of the G band with the peak intensity of the D band being 100 is calculated. Study by the inventors of the present invention found that the state of removal of the rubber carbide from the recycled carbon black was able to be determined from the magnitude of the peak intensity of the G band when compared to the peak intensity of the D band because a larger adhesion amount of the rubber carbide of the recycled carbon black showed the G band with higher intensity.

In the present invention, the G band intensity with the D band intensity being 100 means a value calculated from a Raman spectrum obtained by performing measurement on the following (1) measurement conditions and then performing (2) data processing.
(1) Using a laser Raman spectrometer, HR-800 manufactured by Horiba, Ltd., a carbon black sample to be measured in the form of several particles is placed on a glass slide and are rubbed several times with a spatula to flatten their surfaces, which are measured on the following measurement conditions.
   YAG laser (excitation wavelength): 532 nm
   Number of engraved lines: 600 gr/mm
   Filter: D0.6
   Objective lens magnification: 100-power
   Exposure time: 150 seconds
   Number of times of integration: 2 times
   FIG. 2 illustrates a spectrum example obtained in this case.
(2) The signal intensity at a measurement wavelength (Raman shift) of 2,100 cm⁻¹ of the obtained spectrum is set to 0, an average is determined for each 39 adjacent data points forming the spectrum, and then smoothing processing is performed to obtain a spectral curve connecting the above averages to each other. Next, to facilitate comparison between samples, the peak top intensity observed in a measurement wavelength range of 1,350 ± 20 cm⁻¹ is set to 100.

A Raman spectrum example obtained in this process is the Raman spectrum exemplified in FIG. 1.

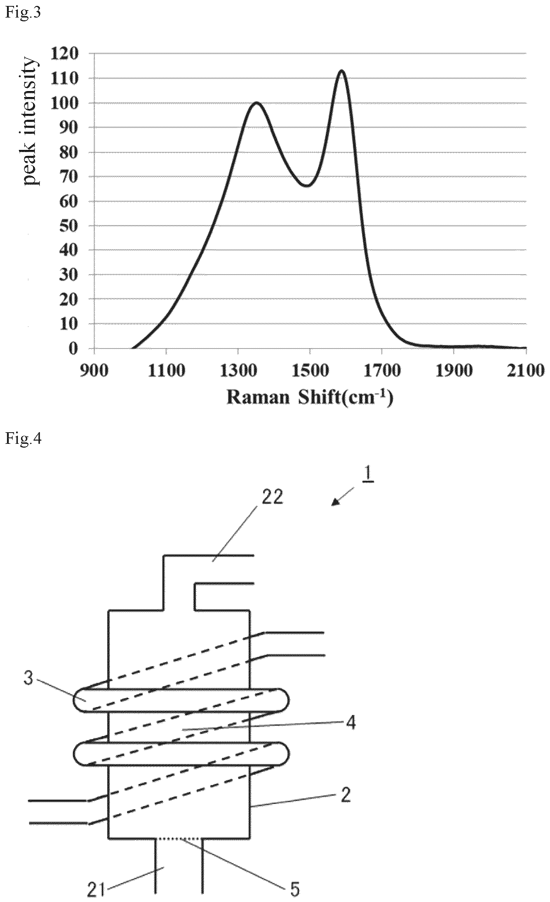

FIG. 1 is a Raman spectrum of a form example of the modified recycled carbon black of the present invention, in which with the peak intensity of the D band being 100, the peak intensity of the G band is 95, which is in a range of 84 or more and 111 or less. On the other hand, FIG. 3 is a Raman spectrum of a form example of a recycled carbon black before modification, in which with the peak intensity of the D band being 100, the peak intensity of the G band is 113, which is beyond a range of 84 or more and 111 or less. These show that the recycled carbon black before modification illustrated in FIG. 3 has a rubber carbide adhering to its surface and that in the modified recycled carbon black illustrated in FIG. 1, the rubber carbide adhering to its surface has been removed owing to its being modified.

The nitrogen adsorption specific surface area N₂SA of the modified recycled carbon black of the present invention is 50 m²/g or more and 250 m²/g or less. By the nitrogen adsorption specific surface area N₂SA of the recycled carbon black being within the above range, the cohesive strength of the recycled carbon black is reduced to a low level, thus increasing reinforcing properties for rubber products. The nitrogen adsorption specific surface area N₂SA of the recycled carbon black is preferably 55 m²/g or more and 245 m²/g or less from the viewpoint of dispersibility in a rubber composition and more preferably 60 m²/g or more and 240 m²/g or less from the viewpoint of reinforcing properties for the rubber composition. On the other hand, if the nitrogen adsorption specific surface area N₂SA of the recycled carbon black is less than the above range, there are fewer bonding points between rubber and the recycled carbon black, thus reducing reinforcing properties. If it exceeds the above range, the cohesive strength of the recycled carbon black is too high, thus reducing reinforcing properties for rubber products.

In the present invention, the nitrogen adsorption specific surface area N₂SA means a value measured by a nitrogen adsorption amount in conformity with the method specified in JIS K6217-2 2017 "Carbon black for rubber - Basic properties - Part 2, How to determine specific surface area."

From the viewpoint of dispersibility in the rubber composition, the absorption amount of dibutyl phthalate (DBP) of the modified recycled carbon black of the present invention is preferably 60 cm³/100 g or more and 200 cm³/100 g or less, more preferably 70 cm³/100 g or more and 195 cm³/100 g or less, and even more preferably 80 cm³/100 g or more and 190 cm³/100 g or less. On the other hand, if the DBP absorption amount is less than the above range, the dispersibility of the carbon black may deteriorate when blended into the rubber composition, and reinforcing properties for rubber to be obtained may be likely to be reduced. If it exceeds the above range, the processability of rubber to be obtained when blended into the rubber composition may reduce.

In the present invention, the DBP absorption amount means a value measured by the method specified in JIS K6217-4 2017 "Carbon black for rubber - Basic properties - Part 4, How to determine DBP absorption amount."

Since the modified recycled carbon black of the present invention is obtained by modifying the recycled carbon black obtained by pyrolyzing rubber products such as waste tires, the ash content of the modified recycled carbon black of the present invention is 3.0% or more and 50.0% or less. The ash content of the modified recycled carbon black of the present invention is preferably 4.0% or more and 45.0% or less and more preferably 5.0% or more and 40.0% or less.

In the present invention, the ash content means a value measured by the method specified in JIS K6218-2 2005 "Carbon black for rubber - Appended properties - Part 2, How to determine ash content."

A method for producing a modified recycled carbon black of a first aspect of the present invention has a step of bringing an oxidative gas into contact with a rubber carbide-adhering recycled carbon black in a reactor heated at 600°C or higher and 1,400°C or lower (hereinafter also referred to as Step A1).

Step A1 is a step of bringing the oxidative gas into contact with the rubber carbide-adhering recycled carbon black in the reactor heated at a certain temperature, thereby oxidizing, decomposing, and removing rubber residuals with a rubber carbide adhering to the surface of the recycled carbon black as a main component.

In Step A1, the recycled carbon black to be brought into contact with the oxidative gas is a carbon black obtained by pyrolyzing rubber products such as waste tires and is a carbon black in which rubber residuals with a rubber carbide as a main component adhere to its surface. Examples of the recycled carbon black to be brought into contact with the oxidative gas include a product name of PB365 manufactured by Enrestec, Inc., a product name of BolderBlack manufactured by Bolder Industries, a product name of DE-Black manufactured by Delta Energy LLC., and a product name of MondoBlack manufactured by ECOLOMONDO. Such recycled carbon black may be produced by any method of production, which is not limited to a particular method, and examples thereof include the method described in Patent Literature 2.

In Step A1, the recycled carbon black to be brought into contact with the oxidative gas is a carbon black having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more and 200 or less and preferably 112 or more and 190 or less.

In Step A1, the ash content of the recycled carbon black to be brought into contact with the oxidative gas is preferably 4.0% or more and 45.0% or less and more preferably 5.0% or more and 40.0% or less.

In Step A1, the N₂SA of the recycled carbon black to be brought into contact with the oxidative gas is 10 m²/g or more and 200 m²/g or less, preferably 20 m²/g or more and 190 m²/g or less, and more preferably 25 m²/g or more and 185 m²/g or less.

In Step A1, the oxidative gas to be brought into contact with the recycled carbon black is an oxygen gas, an oxygen-containing gas, air, or the like. The contact amount of the oxidative gas is selected as appropriate according to the recycled carbon black to be processed, the adhesion amount of the rubber residuals, the type of the oxidative gas used, the specific surface area of the target modified recycled carbon black, and the like.

In Step A1, the temperature in the reactor when the oxidative gas is brought into contact with the recycled carbon black is 600°C or higher and 1,400°C or lower, preferably 700°C or higher and 1,300°C or lower, and more preferably 800°C or higher and 1,200°C or lower. By the temperature in the reactor being within the above range, oxidation moderately proceeds, and removal of the rubber residuals is made easy.

In Step A1, conditions such as the temperature in the reactor and the contact amount and time of the oxidative gas when the oxidative gas is brought into contact with the recycled carbon black are selected as appropriate such that the G band intensity with the D band intensity being 100 and the N₂SA are within the ranges specified in the modified recycled carbon black of the present invention.

In Step A1, the rubber carbide-adhering recycled carbon black is placed in the reactor, the reactor is heated to a certain temperature, and a decomposed gas is discharged out of the reactor while supplying the oxidative gas into the reactor, thereby bringing the oxidative gas into contact with the rubber carbide-adhering recycled carbon black at a certain temperature in the reactor to oxidize, decompose, and remove the rubber residuals with the rubber carbide adhering to the surface of the recycled carbon black as a main component.

Examples include a method performing Step A1 by, after placing the rubber carbide-adhering recycled carbon black in a fluidized-bed reactor like a fluidized-bed reactor 1 illustrated in FIG. 4, heating the inside of the fluidized-bed reactor to a certain temperature, and discharging gas generated by oxidative decomposition from the upper part of the fluidized-bed reactor while supplying the oxidative gas from the lower part of the fluidized-bed reactor.

The fluidized-bed reactor 1 illustrated in FIG. 4 has a substantially cylindrical shape, with the reactor axis extending vertically. The fluidized-bed reactor 1 has a gas inlet 21 for supplying gas to be brought into contact with the carbon black from the lower part of a reactor main body 2 toward the upper part and an exhaust port 22 at the upper part of the reactor main body 2. As illustrated in FIG. 4, the fluidized-bed reactor 1 has a heater coil 3 with electric heating wires spirally wound around the entire periphery of a reactor wall of the reactor main body 2 and has a structure that can heat a stirring area 4 provided inside the reactor main body 2. A filter 5 is provided at the entrance of the gas inlet 21 at the lower part of the reactor main body 2 to prevent the carbon black inside the reactor main body 2 from leaking to the gas inlet 21 from the reactor main body 2.

The oxidative gas is supplied to the fluidized-bed reactor 1 to generate a gas flow. The oxidative gas is preferably supplied into the fluidized-bed reactor 1 in a preheated state, in which case the preheating temperature is preferably 400°C or higher and 600°C or lower, more preferably 450°C or higher and 600°C or lower, even more preferably 450°C or higher and 550°C or lower, still even more preferably 480°C or higher and 550°C or lower, and yet still even more preferably 480°C or higher and 520°C or lower. The oxidative gas is preferably supplied into the fluidized-bed reactor 1 so as to be 0.40 Nm³/hour or more and 3.50 Nm³/hour or less, more preferably supplied so as to be 0.450 Nm³/hour or more and 3.45 Nm³/hour or less, even more preferably supplied so as to be 0.50 Nm³/hour or more and 3.40 Nm³/hour or less, still even more preferably supplied so as to be 0.55 Nm³/hour or more and 3.35 Nm³/hour or less, and yet still even more preferably supplied so as to be 0.60 Nm³/hour or more and 3.30 Nm³/hour or less per 100 g of the rubber carbide-adhering recycled carbon black.

In addition, the oxidative gas to be introduced into the fluidized-bed reactor 1 is preferably supplied such that the pressure at a gas inlet is 1.0 MPa or more and 2.0 MPa or less, more preferably supplied such that the pressure is 1.1 MPa or more and 2.0 MPa or less, even more preferably supplied such that the pressure is 1.1 MPa or more and 1.8 MPa or less, still even more preferably supplied such that the pressure is 1.2 MPa or more and 1.8 MPa or less, and yet still even more preferably supplied such that the pressure is 1.2 MPa or more and 1.5 MPa or less.

When the fluidized-bed reactor 1 is used, the oxidative gas is supplied from the gas inlet 21. The oxidative gas may be supplied with the rubber carbide-adhering recycled carbon black introduced into the fluidized-bed reactor in advance, or the rubber carbide-adhering recycled carbon black may be introduced from a supply port separately provided in the fluidized-bed reactor after the oxidative gas is supplied into the fluidized-bed reactor.

The rubber carbide-adhering recycled carbon black introduced into the fluidized-bed reactor 1 is stirred and fluidized under heating by the gas flow of the oxidative gas. The heating temperature is 600°C or higher and 1,400°C or lower, preferably 700°C or higher and 1,300°C or lower, and more preferably 800°C or higher and 1,200°C or lower. The stirring and fluidizing time is preferably 100 seconds or more and 300 seconds or less, more preferably 110 seconds or more and 300 seconds or less, even more preferably 110 seconds or more and 280 seconds or less, still even more preferably 120 seconds or more and 280 seconds or less, and yet still even more preferably 120 seconds or more and 250 seconds or less.

When the fluidized-bed reactor 1 is used, after the oxidative gas is supplied from the gas inlet 21, the rubber carbide-adhering recycled carbon black is stirred and mixed in the stirring area 4, the temperature of which has been raised by the heater coil 3. The oxidative gas is supplied into the reactor under heating, and the rubber carbide-adhering recycled carbon black is stirred and fluidized by the gas flow of the oxidative gas, thereby bringing the two into contact with each other.

After stirring by the oxidative gas, the supply of the oxidative gas is stopped, preferably a nitrogen gas is introduced to naturally cool the generated carbon black, and thereby the reaction can be stopped. The nitrogen gas is preferably supplied into the fluidized-bed reactor 1 so as to be 6.50 Nm³/hour or more and 8.50 Nm³/hour or less, more preferably supplied so as to be 7.00 Nm³/hour or more and 8.50 Nm³/hour or less, even more preferably supplied so as to be 7.00 Nm³/hour or more and 8.00 Nm³/hour or less, still even more preferably supplied so as to be 7.50 Nm³/hour or more and 8.00 Nm³/hour or less, and yet still even more preferably supplied so as to be 7.50 Nm³/hour or more and 7.80 Nm³/hour or less.

The cooled carbon black particles are separated and collected by a separation and collection apparatus such as a cyclone or bag filter, and thereby the target modified recycled carbon black can be collected.

In the method for producing a modified recycled carbon black of the first aspect of the present invention, by performing Step A1, a modified recycled carbon black having a N₂SA of 50 m²/g or more and 250 m²/g or less, preferably 55 m²/g or more and 245 m²/g or less, and more preferably 60 m²/g or more and 240 m²/g or less and having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less, preferably 85 or more and 110 or less, and more preferably 86 or more and 109 or less is obtained.

A method for producing a modified recycled carbon black of a second aspect of the present invention has a step of bringing an oxidative gas into contact with a rubber carbide-adhering recycled carbon black in a reactor heated at 600°C or higher and 1,400°C or lower and a step of bringing a hydrocarbon gas into contact with the rubber carbide-adhering recycled carbon black in the reactor.

An example of the method for producing a modified recycled carbon black of the second aspect of the present invention is a method for producing a modified recycled carbon black having a step of bringing the oxidative gas into contact with the rubber carbide-adhering recycled carbon black in the reactor heated at 600°C or higher and 1,400°C or lower (hereinafter Step A2) and a step of bringing the hydrocarbon gas into contact with the recycled carbon black after being subjected to the step of bringing the oxidative gas into contact (Step B2). That is, after performing the step of bringing the oxidative gas into contact, the step of bringing the hydrocarbon gas into contact is performed.

Step A2 is a step of bringing the oxidative gas into contact with the rubber carbide-adhering recycled carbon black in the reactor heated at a certain temperature, thereby oxidizing, decomposing, and removing rubber residuals with a rubber carbide adhering to the surface of the recycled carbon black as a main component.

In Step A2, the recycled carbon black to be brought into contact with the oxidative gas is a carbon black obtained by pyrolyzing rubber products such as waste tires and is a carbon black in which rubber residuals with a rubber carbide as a main component adhere to its surface. Examples of the recycled carbon black to be brought into contact with the oxidative gas include a product name of PB365 manufactured by Enrestec, Inc., a product name of BolderBlack manufactured by Bolder Industries, a product name of DE-Black manufactured by Delta Energy LLC., and a product name of MondoBlack manufactured by ECOLOMONDO. Such recycled carbon black may be produced by any method of production, which is not limited to a particular method, and examples thereof include the method described in Patent Literature 2.

In Step A2, the recycled carbon black to be brought into contact with the oxidative gas is a carbon black having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more and 200 or less and preferably 112 or more and 190 or less.

In Step A2, the ash content of the recycled carbon black to be brought into contact with the oxidative gas is preferably 3.0% or more and 50.0% or less and more preferably 4.0% or more and 45.0% or less.

In Step A2, the oxidative gas to be brought into contact with the recycled carbon black is an oxygen gas, an oxygen-containing gas, air, or the like. The contact amount of the oxidative gas is selected as appropriate according to the recycled carbon black to be processed, the adhesion amount of the rubber residuals, the type of the oxidative gas used, the specific surface area of the target modified recycled carbon black, and the like.

In Step A2, the temperature in the reactor when the oxidative gas is brought into contact with the recycled carbon black is 600°C or higher and 1,400°C or lower, preferably 700°C or higher and 1,300°C or lower, and more preferably 800°C or higher and 1,200°C or lower. By the temperature in the reactor being within the above range, oxidation moderately proceeds, and removal of the rubber residuals is made easy.

In Step A2, conditions such as the temperature in the reactor and the contact amount and time of the oxidative gas when the oxidative gas is brought into contact with the recycled carbon black are selected as appropriate so as to be able to check removal of the rubber residuals when being observed with a transmission electron microscope or the like.

In Step A2, the rubber carbide-adhering recycled carbon black is placed in the reactor, the reactor is heated to a certain temperature, and a decomposed gas is discharged out of the reactor while supplying the oxidative gas into the reactor, thereby bringing the oxidative gas into contact with the rubber carbide-adhering recycled carbon black at a certain temperature in the reactor to oxidize, decompose, and remove the rubber residuals with the rubber carbide adhering to the surface of the recycled carbon black as a main component.

For example, after placing the rubber carbide-adhering recycled carbon black in a fluidized-bed reactor like the fluidized-bed reactor 1 illustrated in FIG. 4, the inside of the fluidized-bed reactor is heated to a certain temperature, and gas generated by oxidative decomposition is discharged from the upper part of the fluidized-bed reactor while supplying the oxidative gas from the lower part of the fluidized-bed reactor, thereby performing Step A2.

The oxidative gas is supplied to the fluidized-bed reactor 1 to generate a gas flow. The oxidative gas is preferably supplied into the fluidized-bed reactor 1 in a preheated state, in which case the preheating temperature is preferably 400°C or higher and 600°C or lower, more preferably 450°C or higher and 600°C or lower, even more preferably 450°C or higher and 550°C or lower, still even more preferably 480°C or higher and 550°C or lower, and yet still even more preferably 480°C or higher and 520°C or lower. The oxidative gas is preferably supplied into the fluidized-bed reactor 1 so as to be 2.50 Nm³/hour or more and 8.50 Nm³/hour or less, more preferably supplied so as to be 2.55 Nm³/hour or more and 8.45 Nm³/hour or less, even more preferably supplied so as to be 2.60 Nm³/hour or more and 8.40 Nm³/hour or less, still even more preferably supplied so as to be 2.65 Nm³/hour or more and 8.35 Nm³/hour or less, and yet still even more preferably supplied so as to be 2.70 Nm³/hour or more and 8.30 Nm³/hour or less per 100 g of the rubber carbide-adhering recycled carbon black.

In addition, the oxidative gas to be introduced into the fluidized-bed reactor 1 is preferably supplied such that the pressure at a gas inlet is 1.0 MPa or more and 2.0 MPa or less, more preferably supplied such that the pressure is 1.1 MPa or more and 2.0 MPa or less, even more preferably supplied such that the pressure is 1.1 MPa or more and 1.8 MPa or less, still even more preferably supplied such that the pressure is 1.2 MPa or more and 1.8 MPa or less, and yet still even more preferably supplied such that the pressure is 1.2 MPa or more and 1.5 MPa or less.

When the fluidized-bed reactor 1 is used, the oxidative gas is supplied from the gas inlet 21. The oxidative gas may be supplied with the rubber carbide-adhering recycled carbon black introduced into the reactor in advance, or the rubber carbide-adhering recycled carbon black may be introduced from a supply port separately provided in the reactor after the oxidative gas is supplied into the reactor.

The rubber carbide-adhering recycled carbon black introduced into the fluidized-bed reactor 1 is stirred and fluidized under heating by the gas flow of the oxidative gas. The heating temperature is 600°C or higher and 1,400°C or lower, preferably 700°C or higher and 1,300°C or lower, and more preferably 800°C or higher and 1,200°C or lower. The stirring and fluidizing time is preferably 100 seconds or more and 300 seconds or less, more preferably 110 seconds or more and 300 seconds or less, even more preferably 110 seconds or more and 280 seconds or less, still even more preferably 120 seconds or more and 280 seconds or less, and yet still even more preferably 120 seconds or more and 250 seconds or less.

When the fluidized-bed reactor 1 is used, after the oxidative gas is supplied from the gas inlet 21, the rubber carbide-adhering recycled carbon black is stirred and mixed in the stirring area 4, the temperature of which has been raised by the heater coil 3. The oxidative gas is supplied into the reactor under heating, and the rubber carbide-adhering recycled carbon black is stirred and fluidized by the gas flow of the oxidative gas, thereby bringing the two into contact with each other.

Step B2 is a step of bringing the hydrocarbon gas into contact with the recycled carbon black after being subj ected to Step A2 in the reactor heated at a certain temperature, thereby filling pores formed on the surface of the recycled carbon black with a carbide produced by pyrolysis of the hydrocarbon gas and reducing the specific surface area of the recycled carbon black.

In Step B2, the hydrocarbon gas to be brought into contact with the recycled carbon black after being subjected to Step A2 is not limited to a particular gas so long as it is pyrolyzed by being heated at a certain temperature in the reactor to produce a carbide. Examples thereof include a methane gas, an ethane gas, a propane gas, and a butane gas. The contact amount of the hydrocarbon gas is selected as appropriate according to the specific surface area of the recycled carbon black to be processed, the type of the hydrocarbon gas used, the specific surface area of the target modified recycled carbon black, and the like.

In Step B2, the temperature in the reactor when the hydrocarbon gas is brought into contact with the recycled carbon black is 600°C or higher and 1,400°C or lower, preferably 700°C or higher and 1,300°C or lower, and more preferably 800°C or higher and 1,200°C or lower. By the temperature in the reactor being within the above range, the hydrocarbon gas is adsorbed to the pores of a few nanometers or less in diameter present on the surface of the recycled carbon black and carbonized, thereby moderately reducing the specific surface area N₂SA.

In Step B2, conditions such as the temperature in the reactor and the contact amount and time of the hydrocarbon gas when the hydrocarbon gas is brought into contact with the recycled carbon black are selected as appropriate such that the N₂SA is within the range specified in the modified recycled carbon black of the present invention.

In Step B2, the recycled carbon black after being subjected to Step A2 is placed in the reactor, the reactor is heated to a certain temperature, and a reaction gas is discharged out of the reactor while supplying the hydrocarbon gas into the reactor, thereby bringing the hydrocarbon gas into contact with the recycled carbon black after being subjected to Step A2 at the certain temperature in the reactor, producing a carbide, and filling the pores formed on the surface of the recycled carbon black with the carbide.

For example, with the recycled carbon black after being subjected to Step A2 placed in a fluidized-bed reactor like the fluidized-bed reactor 1 illustrated in FIG. 4, the inside of the fluidized-bed reactor is heated to a certain temperature, and the reaction gas is discharged from upper part of the fluidized-bed reactor while supplying the hydrocarbon gas from the lower part of the fluidized-bed reactor, thereby performing Step B2.

The hydrocarbon gas is supplied to the fluidized-bed reactor 1 to generate a gas flow. The hydrocarbon gas is preferably supplied into the fluidized-bed reactor 1 in a preheated state, in which case the preheating temperature is preferably 400°C or higher and 600°C or lower, more preferably 450°C or higher and 600°C or lower, even more preferably 450°C or higher and 550°C or lower, still even more preferably 480°C or higher and 550°C or lower, and yet still even more preferably 480°C or higher and 520°C or lower. The hydrocarbon gas is preferably supplied into the fluidized-bed reactor 1 so as to be 0.03 Nm³/hour or more and 3.00 Nm³/hour or less, more preferably supplied so as to be 0.35 Nm³/hour or more and 2.95 Nm³/hour or less, even more preferably supplied so as to be 0.40 Nm³/hour or more and 2.90 Nm³/hour or less, still even more preferably supplied so as to be 0.45 Nm³/hour or more and 2.85 Nm³/hour or less, and yet still even more preferably supplied so as to be 0.50 Nm³/hour or more and 2.80 Nm³/hour or less per 100 g of the recycled carbon black after being subjected to Step A2.

In addition, the hydrocarbon gas to be introduced into the fluidized-bed reactor 1 is preferably supplied such that the pressure at a gas inlet is 1.0 MPa or more and 2.0 MPa or less, more preferably supplied such that the pressure is 1.1 MPa or more and 2.0 MPa or less, even more preferably supplied such that the pressure is 1.1 MPa or more and 1.8 MPa or less, still even more preferably supplied such that the pressure is 1.2 MPa or more and 1.8 MPa or less, and yet still even more preferably supplied such that the pressure is 1.2 MPa or more and 1.5 MPa or less.

When the fluidized-bed reactor 1 is used, the hydrocarbon gas is supplied from the gas inlet 21. The hydrocarbon gas may be supplied with the recycled carbon black after being subjected to Step A2 introduced into the fluidized-bed reactor in advance, or the recycled carbon black after being subjected to Step A2 may be introduced from a supply port separately provided in the fluidized-bed reactor after the hydrocarbon gas is supplied into the fluidized-bed reactor.

The recycled carbon black after being subjected to Step A2 introduced into the fluidized-bed reactor 1 is stirred and fluidized under heating by the gas flow of the hydrocarbon gas. The heating temperature is 600°C or higher and 1,400°C or lower, preferably 700°C or higher and 1,300°C or lower, and more preferably 800°C or higher and 1,200°C or lower. The stirring and fluidizing time is preferably 100 seconds or more and 300 seconds or less, more preferably 110 seconds or more and 300 seconds or less, even more preferably 110 seconds or more and 280 seconds or less, still even more preferably 120 seconds or more and 280 seconds or less, and yet still even more preferably 120 seconds or more and 250 seconds or less.

When the fluidized-bed reactor 1 is used, after supplying the hydrocarbon gas from the gas inlet 21, the recycled carbon black after being subjected to Step A2 is stirred and mixed in the stirring area 4, the temperature of which has been raised by the heater coil 3. The hydrocarbon gas is supplied into the reactor under heating, and the recycled carbon black after being subjected to Step A2 is stirred and fluidized by the gas flow of the hydrocarbon gas, thereby bringing the two into contact with each other.

After stirring by the hydrocarbon gas, the supply of the hydrocarbon gas is stopped, preferably a nitrogen gas is introduced to naturally cool the generated carbon black, and thereby the reaction can be stopped. The nitrogen gas is preferably supplied into the fluidized-bed reactor 1 so as to be 6.50 Nm³/hour or more and 8.50 Nm³/hour or less, more preferably supplied so as to be 7.00 Nm³/hour or more and 8.50 Nm³/hour or less, even more preferably supplied so as to be 7.00 Nm³/hour or more and 8.00 Nm³/hour or less, still even more preferably supplied so as to be 7.50 Nm³/hour or more and 8.00 Nm³/hour or less, and yet still even more preferably supplied so as to be 7.50 Nm³/hour or more and 7.80 Nm³/hour or less.

The cooled carbon black particles are separated and collected by a separation and collection apparatus such as a cyclone or bag filter, and thereby the target modified recycled carbon black can be collected.

An example of the method for producing a modified recycled carbon black of the second aspect of the present invention is a method for producing a modified recycled carbon black having a step of bringing the oxidative gas and the hydrocarbon gas into contact with the rubber carbide-adhering recycled carbon black in the reactor heated at 600°C or higher and 1,400°C or lower (hereinafter Step C2).

Step C2 is a step of bringing the oxidative gas and the hydrocarbon gas into contact with the rubber carbide-adhering recycled carbon black in the reactor heated at a certain temperature, thereby oxidizing, decomposing, and removing rubber residuals with a rubber carbide adhering to the surface of the recycled carbon black as a main component and bringing the hydrocarbon gas into contact with the recycled carbon black from which the rubber residuals with the rubber carbide as a main component have been removed, thereby filling pores formed on the surface of the recycled carbon black with a carbide produced by pyrolysis of the hydrocarbon gas and reducing the specific surface area of the recycled carbon black.

In Step C2, the recycled carbon black to be brought into contact with the oxidative gas and the hydrocarbon gas is a carbon black obtained by pyrolyzing rubber products such as waste tires and is a carbon black in which rubber residuals with a rubber carbide as a main component adhere to its surface. Examples of the recycled carbon black to be brought into contact with the oxidative gas and the hydrocarbon gas include a product name of PB365 manufactured by Enrestec, Inc., a product name of BolderBlack manufactured by Bolder Industries, a product name of DE-Black manufactured by Delta Energy LLC., and a product name of MondoBlack manufactured by ECOLOMONDO. Such recycled carbon black may be produced by any method of production, which is not limited to a particular method, and examples thereof include the method described in Patent Literature 2.

In Step C2, the recycled carbon black to be brought into contact with the oxidative gas and the hydrocarbon gas is a carbon black having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more and 200 or less and preferably 112 or more and 190 or less.

In Step C2, the ash content of the recycled carbon black to be brought into contact with the oxidative gas is preferably 3.0% or more and 50.0% or less and more preferably 5.0% or more and 45.0% or less.

In Step C2, the oxidative gas to be brought into contact with the recycled carbon black is an oxygen gas, an oxygen-containing gas, air, or the like. In Step C2, the hydrocarbon gas to be brought into contact with the recycled carbon black is not limited to a particular gas so long as it is pyrolyzed by being heated at a certain temperature in the reactor to produce a carbide. Examples thereof include a methane gas, an ethane gas, a propane gas, and a butane gas. The contact amount of the oxidative gas is selected as appropriate according to the recycled carbon black to be processed, the adhesion amount of the rubber residuals, the type of the oxidative gas used, the specific surface area of the target modified recycled carbon black, and the like. The contact amount of the hydrocarbon gas is selected as appropriate according to the specific surface area of the recycled carbon black to be processed, the type of the hydrocarbon gas used, the specific surface area of the target modified recycled carbon black, and the like.

In Step C2, the temperature in the reactor when the oxidative gas and the hydrocarbon gas are brought into contact with the recycled carbon black is 600°C or higher and 1,400°C or lower, preferably 700°C or higher and 1,300°C or lower, and more preferably 800°C or higher and 1,200°C or lower. By the temperature in the reactor being within the above range, the hydrocarbon gas is adsorbed to the pores of a few nanometers or less in diameter present on the surface of the recycled carbon black and carbonized, thereby moderately reducing the specific surface area N₂SA.

In Step C2, conditions such as the temperature in the reactor and the contact amount and time of the oxidative gas and the hydrocarbon gas when the oxidative gas and the hydrocarbon gas are brought into contact with the recycled carbon black are selected as appropriate such that the G band intensity with the D band intensity being 100 and the N₂SA are within the ranges specified in the modified recycled carbon black of the present invention.

In Step C2, the rubber carbide-adhering recycled carbon black is placed in the reactor, the reactor is heated to a certain temperature, and a decomposed gas and a reaction gas are discharged out of the reactor while supplying the oxidative gas and the hydrocarbon gas into the reactor, thereby bringing the oxidative gas into contact with the rubber carbide-adhering recycled carbon black at the certain temperature in the reactor to oxidize, decompose, and remove the rubber residuals with the rubber carbide adhering to the surface of the recycled carbon black as a main component, and bringing the hydrocarbon gas into contact with the recycled carbon black from which the rubber residuals with the rubber carbide as a main component have been removed, thereby filling the pores formed on the surface of the recycled carbon black with a carbide produced by pyrolysis of the hydrocarbon gas and reducing the specific surface area of the recycled carbon black.

For example, after placing the rubber carbide-adhering recycled carbon black in a fluidized-bed reactor like the fluidized-bed reactor 1 illustrated in FIG. 4, the inside of the fluidized-bed reactor is heated to a certain temperature, and a decomposed gas oxidatively decomposed by the oxidative gas and a reaction gas generated by pyrolysis of the hydrocarbon gas are discharged from the upper part of the fluidized-bed reactor while supplying the oxidative gas and the hydrocarbon gas from the lower part of the fluidized-bed reactor, thereby performing Step C2.

The oxidative gas and the hydrocarbon gas are simultaneously supplied to the fluidized-bed reactor 1 to generate a gas flow. The oxidative gas and the hydrocarbon gas are preferably supplied into the fluidized-bed reactor 1 in a preheated state, in which case the preheating temperature is preferably 400°C or higher and 600°C or lower, more preferably 450°C or higher and 600°C or lower, even more preferably 450°C or higher and 550°C or lower, still even more preferably 480°C or higher and 550°C or lower, and yet still even more preferably 480°C or higher and 520°C or lower. As to the oxidative gas and the hydrocarbon gas, per 100 of the rubber carbide-adhering recycled carbon black, the oxidative gas is preferably supplied into the fluidized-bed reactor 1 so as to be 2.50 Nm³/hour or more and 8.50 Nm³/hour or less, more preferably supplied so as to be 2.55 Nm³/hour or more and 8.45 Nm³/hour or less, even more preferably supplied so as to be 2.60 Nm³/hour or more and 8.40 Nm³/hour or less, still even more preferably supplied so as to be 2.65 Nm³/hour or more and 8.35 Nm³/hour or less, and yet still even more preferably 2.70 Nm³/hour or more and 8.30 Nm³/hour or less, and the hydrocarbon gas is preferably supplied into the fluidized-bed reactor 1 so as to be 0.30 Nm³/hour or more and 3.00 Nm³/hour or less, more preferably supplied so as to be 0.35 Nm³/hour or more and 2.95 Nm³/hour or less, even more preferably supplied so as to be 0.40 Nm³/hour or more and 2.90 Nm³/hour or less, still even more preferably supplied so as to be 0.45 Nm³/hour or more and 2.85 Nm³/hour or less, and yet still even more preferably supplied so as to be 0.50 Nm³/hour or more and 2.80 Nm³/hour or less.

In addition, the oxidative gas and the hydrocarbon gas to be introduced into the fluidized-bed reactor 1 are preferably supplied such that the pressure at a gas inlet is 1.0 MPa or more and 2.0 MPa or less, more preferably supplied such that the pressure is 1.1 MPa or more and 2.0 MPa or less, even more preferably supplied such that the pressure is 1.1 MPa or more and 1.8 MPa or less, still even more preferably supplied such that the pressure is 1.2 MPa or more and 1.8 MPa or less, and yet still even more preferably supplied such that the pressure is 1.2 MPa or more and 1.5 MPa or less.

When the fluidized-bed reactor 1 is used, the oxidative gas and the hydrocarbon gas are supplied from the gas inlet 21. The oxidative gas may be supplied with the rubber carbide-adhering recycled carbon black introduced into the reactor in advance, or the rubber carbide-adhering recycled carbon black may be introduced from a supply port separately provided in the fluidized-bed reactor after the oxidative gas and the hydrocarbon gas are supplied into the fluidized-bed reactor.

The rubber carbide-adhering recycled carbon black introduced into the fluidized-bed reactor 1 is stirred and fluidized under heating by the gas flows of the oxidative gas and the hydrocarbon gas. The heating temperature is 600°C or higher and 1,400°C or lower, preferably 700°C or higher and 1,300°C or lower, and more preferably 800°C or higher and 1,200°C or lower. The stirring and fluidizing time is preferably 100 seconds or more and 300 seconds or less, more preferably 110 seconds or more and 300 seconds or less, even more preferably 110 seconds or more and 280 seconds or less, still even more preferably 120 seconds or more and 280 seconds or less, and yet still even more preferably 120 seconds or more and 250 seconds or less.

When the fluidized-bed reactor 1 is used, after the oxidative gas and the hydrocarbon gas are supplied from the gas inlet 21, the rubber carbide-adhering recycled carbon black is stirred and mixed in the stirring area 4, the temperature of which has been raised by the heater coil 3. The oxidative gas and the hydrocarbon gas are supplied into the reactor under heating, and the rubber carbide-adhering recycled carbon black is stirred and fluidized by the gas flow of the oxidative gas and the hydrocarbon gas, thereby bringing the two into contact with each other.

After stirring by the oxidative gas and the hydrocarbon gas, the supply of the oxidative gas and the hydrocarbon gas is stopped, preferably a nitrogen gas is introduced to naturally cool the generated carbon black, and thereby the reaction can be stopped. The nitrogen gas is preferably supplied into the fluidized-bed reactor 1 so as to be 6.50 Nm³/hour or more and 8.50 Nm³/hour or less, more preferably supplied so as to be 7.00 Nm³/hour or more and 8.50 Nm³/hour or less, even more preferably supplied so as to be 7.00 Nm³/hour or more and 8.00 Nm³/hour or less, still even more preferably so as to be 7.50 Nm³/hour or more and 8.00 Nm³/hour or less, and yet still even more preferably supplied so as to be 7.50 Nm³/hour or more and 7.80 Nm³/hour or less.

The cooled carbon black particles are separated and collected by a separation and collection apparatus such as a cyclone or bag filter, and thereby the target modified recycled carbon black can be collected.

In the method for producing a modified recycled carbon black of the second aspect of the present invention, by performing Step A2 and Step B2 or performing Step C2, a modified recycled carbon black having a N₂SA of 50 m²/g or more and 250 m²/g or less, preferably 55 m²/g or more and 245 m²/g or less, and more preferably 60 m²/g or more and 240 m²/g or less and having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less, preferably 85 or more and 110 or less, and more preferably 86 or more and 109 or less is obtained.

The method for producing a modified recycled carbon black of the first aspect of the present invention is a method of oxidatively decomposing the rubber residuals with the rubber carbide adhering to the rubber carbide-adhering recycled carbon black as a main component by Step A1 to make both the G band intensity with the D band intensity being 100 and the N₂SA of the recycled carbon black the specified values of the modified recycled carbon black of the present invention.

An example of the method for producing a modified recycled carbon black of the second aspect of the present invention is a method of, when the G band intensity, with the D band intensity being 100, of the recycled carbon black has been able to be the specified value of the modified recycled carbon black of the present invention by the oxidative decomposition of the rubber residuals with the rubber carbide adhering to the rubber carbide-adhering recycled carbon black as a main component by Step A2, but the N₂SA has become larger than the specified value of the modified recycled carbon black of the present invention because many pores have been produced in the recycled carbon black because oxidation has proceeded, performing Step B2 to fill the pores with the carbide, thereby making the N₂SA the specified value of the modified recycled carbon black of the present invention. Alternatively, an example of the method for producing a modified recycled carbon black of the second aspect of the present invention is a method of, when the G band intensity with the D band intensity being 100 and the N₂SA of the recycled carbon black have been able to be the specified values of the modified recycled carbon black of the present invention by the oxidative decomposition of the rubber residuals with the rubber carbide adhering to the rubber carbide-adhering recycled carbon black as a main component by Step A2, but the N₂SA is desired to be further adjusted, performing Step B2 to fill the pores with the carbide, thereby adjusting the N₂SA within the range of the specified value of the modified recycled carbon black of the present invention.

An example of the method for producing a modified recycled carbon black of the second aspect of the present invention is a method of, when the G band intensity, with the D band intensity being 100, of the recycled carbon black can be the specified value of the modified recycled carbon black of the present invention by the oxidative decomposition of the rubber residuals with the rubber carbide adhering to the rubber carbide-adhering recycled carbon black as a main component by Step C2, but the N₂SA has become larger than the specified value of the modified recycled carbon black of the present invention or the N₂SA is desired to be adjusted because many pores have been produced in the recycled carbon black because oxidation has proceeded, filling the pores with the carbide simultaneously in Step C2, thereby making the N₂SA the specified value of the modified recycled carbon black of the present invention or adjusting it within the range of the specified value.

A modified recycled carbon black of a first aspect of the present invention is obtained by performing a step of bringing an oxidative gas into contact with a rubber carbide-adhering recycled carbon black in a reactor heated at 600°C or higher and 1,400°C or lower,
has an N₂SA of 50 m²/g or more and 250 m²/g or less, preferably 55 m²/g or more and 245 m²/g or less, and more preferably 60 m²/g or more and 240 m²/g or less, and
has, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less, preferably 85 or more and 110 or less, and more preferably 86 or more and 109 or less.

The step of bringing an oxidative gas into contact with a rubber carbide-adhering recycled carbon black in a reactor heated at 600°C or higher and 1,400°C or lower according to the modified recycled carbon black of the first aspect of the present invention is similar to Step A1 according to the method for producing a modified recycled carbon black of the first aspect of the present invention.

A modified recycled carbon black of a second aspect of the present invention is obtained by performing a step of bringing an oxidative gas into contact with a rubber carbide-adhering recycled carbon black in a reactor heated at 600°C or higher and 1,400°C or lower and a step of bringing a hydrocarbon gas into contact with the rubber carbide-adhering recycled carbon black in the reactor,
has an N₂SA of 50 m²/g or more and 250 m²/g or less, preferably 55 m²/g or more and 245 m²/g or less, and more preferably 60 m²/g or more and 240 m²/g or less, and
has, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less, preferably 85 or more and 110 or less, and more preferably 86 or more and 109 or less.

An example of the modified recycled carbon black of the second aspect of the present invention is a modified recycled carbon black obtained by performing a step of bringing the oxidative gas into contact with the rubber carbide-adhering recycled carbon black in the reactor heated at 600°C or higher and 1,400°C or lower (hereinafter Step A2) and a step of bringing the hydrocarbon gas into contact with the recycled carbon black subjected to the step of bringing the oxidative gas into contact (Step B2).

An example of the modified recycled carbon black of the second aspect of the present invention is a modified recycled carbon black obtained by performing a step of bringing the oxidative gas and the hydrocarbon gas into contact with the rubber carbide-adhering recycled carbon black in the reactor heated at 600°C or higher and 1,400°C or lower (hereinafter Step C2).

Step A2, Step B2, and Step C2 according to the modified recycled carbon black of the second aspect of the present invention are similar to Step A2, Step B2, and Step C2 according to the method for producing a modified recycled carbon black of the second aspect of the present invention, respectively.

The modified recycled carbon black of the present invention, the modified recycled carbon black obtained by performing the method for producing a modified recycled carbon black of the first aspect of the present invention, and the modified recycled carbon black obtained by performing the method for producing a modified recycled carbon black of the second aspect of the present invention have no adhesion of rubber residuals with a rubber carbide as a main component or little adhesion, if any, and reduce cohesiveness to a low degree, can thus strengthen bonding with the rubber component to the same extent as a carbon black that has never been used as a filler for tires, and can thus increase reinforcing properties for rubber products.

The rubber composition of the present invention contains a rubber component, and
the modified recycled carbon black of the present invention in an amount of 1 part by mass or more and 100 parts by mass or less with respect to 100 parts by mass of the rubber component.

In the rubber composition of the present invention, examples of the rubber component include at least one selected from diene-based rubbers such as natural rubber, a styrene-butadiene rubber, a polybutadiene rubber, an isoprene rubber, a butyl rubber, a chloroprene rubber, and an acrylonitrile-butadiene copolymer rubber.

The rubber composition of the present invention contains the modified recycled carbon black of the present invention, and the details of the modified recycled carbon black of the present invention contained in the rubber composition are as described above.

Since the modified recycled carbon black of the present invention has removed the rubber residuals with the rubber carbide adhering to the surface of the recycled carbon black as a main component and has cohesiveness reduced to a low level, it has strong bonding with the rubber component and thus has high reinforcing properties for the rubber composition, and thus the rubber composition of the present invention has high strength.

In the rubber composition of the present invention, the content ratio of the modified recycled carbon black of the present invention is 1 part by mass or more and 100 parts by pass or less with respect to 100 parts by mass of the rubber component, preferably 10 parts by mass or more and 80 parts by mass or less with respect to 100 parts by mass of the rubber component, and more preferably 15 parts by mass or more and 70 parts by mass or less with respect to 100 parts by mass of the rubber component. In the rubber composition of the present invention, by the content ratio of the modified recycled carbon black of the present invention being within the above range, a rubber composition with high strength can be obtained.

The rubber composition of the present invention may contain necessary components such as inorganic reinforcements, silane coupling agents, vulcanizing agents, vulcanization accelerators, antioxidants, vulcanization aids, softeners, and plasticizers, which are regularly used. The rubber composition of the present invention preferably contains these components in total in an amount of 1% by mass or more and 40% by mass or less, more preferably contains them in an amount of 2% by mass or more and 30% by mass or less, and even more preferably contains them in an amount of 3% by mass or more and 25% by mass or less.

The rubber composition of the present invention can be obtained by kneading a certain amount of the modified recycled carbon black of the present invention and, as needed, desired amounts of inorganic reinforcements, silane coupling agents, vulcanizing agents, vulcanization accelerators, antioxidants, vulcanization aids, softeners, plasticizers, and the like with the rubber component. The kneading can be performed using a known kneading machine such as a mixer or mill.

The rubber composition of the present invention is molded into a certain shape and then cured by being heated at 130 to 180°C as appropriate, and thereby a desired rubber molded body can be obtained.

### [Examples]

The following describes the present invention using the following examples.

### (Examples 1 to 9 and Comparative Examples 1 to 6)

In the fluidized-bed reactor illustrated in FIG. 4, 100 g of a recycled carbon black to be processed (before modification) listed in Table 1 was placed, and a step of contact with an oxidative gas (Step 1) and/or a step of contact with a hydrocarbon gas (Step 2) was performed under the conditions listed in Table 1 to obtain a modified recycled carbon black. When both Step 1 and Step 2 were performed, in Examples 1 to 8 and Comparative Examples 1 to 6, after performing Step 1, Step 2 was performed. In Example 9, the oxidative gas and the hydrocarbon gas were simultaneously supplied, and Step 1 and Step 2 were simultaneously performed.

### (Reference Examples 1 and 2)

As unused carbon blacks, unused products of commercially available SEAST3 (Reference Example 1) and SEAST6 (Reference Example 2) were used.

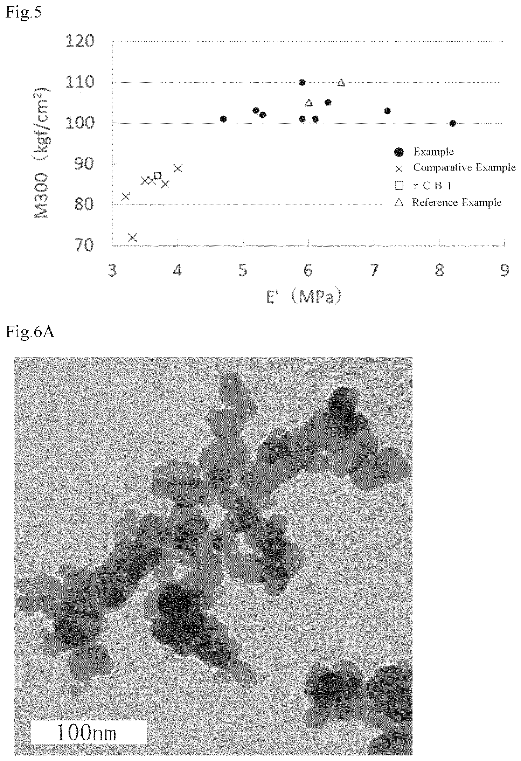

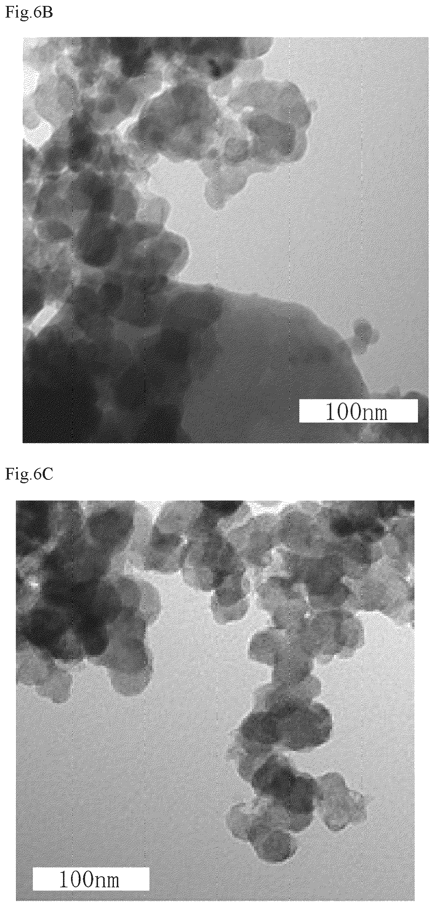

Next, the nitrogen adsorption specific surface area N₂SA and the G band intensity, with the D band intensity being 100, of the recycled carbon black before modification, the obtained modified recycled carbon black, and the unused carbon black were measured. Table 2 lists the results. FIGS. 6A, 6B, and 6C illustrate electron micrographs obtained by observing the unused carbon black (SEAST6), the recycled carbon black before modification (rCB before modification rCB1), and the modified recycled carbon black (rCB after modification Example 7) with an electron microscope, respectively.

Next, as listed in Table 3, kneaded together were 100 parts by mass of natural rubber (RSS#1) as a rubber component, 45 parts by mass of any of the modified recycled carbon black, the recycled carbon black before modification, and the unused carbon black obtained in the above examples and comparative examples, 3 parts by mass of stearic acid, 1 part by mass of an antioxidant (Antage 6C manufactured by Kawaguchi Chemical Industry Co., Ltd.), and 4 parts by mass of zinc oxide with a sealed type mixer (MIXTRON BB-2 manufactured by Kobe Steel, Ltd.), and the obtained kneaded product, 0.5 part by mass of a vulcanization accelerator (Accel NS manufactured by Kawaguchi Chemical Industry Co., Ltd.), and 1.5 parts by mass of sulfur were kneaded together with an open roll to obtain a rubber composition.

Next, each of the obtained rubber compositions was vulcanized for 35 minutes at a temperature condition of 145°C to form vulcanized rubber.

The obtained vulcanized rubber was used to measure a dynamic storage modulus (E') and a tensile stress (M300) by the following methods. Table 2 lists the results. FIG. 5 illustrates a relation between the dynamic storage modulus (E') and the tensile stress (M300) of the examples, the comparative examples, and the unused carbon blacks.

Recycled carbon black 1 (rCB1)
   Recycled carbon black obtained by pyrolysis of waste tires
   PB365 manufactured by Enrestec, Inc.
   Ash content: 18.6%,
   G band intensity with D band intensity being 100: 113
   N₂SA: 78 m²/g
Oxidative gas: Air gas
Hydrocarbon gas: Methane gas

### <Measurement of (Dynamic Storage Modulus) (E')>

Using a test piece of 2 mm thick, 35 mm long, and 5 mm wide cut out of each of the obtained vulcanized rubbers, the dynamic storage modulus (E') was measured using a fully automatic viscoelasticity analyzer (VR-7130 manufactured by Ueshima Seisakusho Co., Ltd.) under the measurement conditions of a frequency of 50 Hz, a dynamic strain rate of 1.26%, and a measurement temperature of 60°C in accordance with JIS K6394 2007 "Vulcanized rubber and thermoplastic rubber - How to determine dynamic properties - General guidelines."

### <Measurement of (Tensile Stress) (M300)>

Using a JIS dumbbell-shaped No. 3 test piece cut out of each of the obtained vulcanized rubbers, a stress at an elongation of 300% was measured using a Strograph AE-CT manufactured by Toyo Seiki Seisaku-sho, Ltd. in accordance with JIS K6251 2017 "Vulcanized rubber and thermoplastic rubber - How to determine tensile properties."

**[Table 1]**

| | Raw material to be processed | Step 1 | | Step 2 | |
|---|---|---|---|---|---|
| | | Temperature (°C) | Gas supply amount (Nm³/hour) | Temperature (°C) | Gas supply amount (Nm³/hour) |
| Comparative | rCB1 | - | - | 1000 | 1.80 |
| Example 1 | | | | | |
| Comparative Example 2 | rCB1 | 1000 | 0.30 | - | - |
| Comparative Example 3 | rCB1 | 1000 | 3.60 | - | - |
| Comparative Example 4 | rCB1 | 1000 | 2.40 | 1000 | 1.80 |
| Comparative Example 5 | rCB1 | 1000 | 9.00 | 1000 | 3.00 |
| Comparative Example 6 | rCB1 | 1000 | 3.00 | 1000 | 5.00 |
| Example 1 | rCB1 | 1000 | 0.60 | - | - |
| Example 2 | rCB1 | 1000 | 1.20 | - | - |
| Example 3 | rCB1 | 1000 | 1.80 | - | - |
| Example 4 | rCB1 | 1000 | 2.40 | - | - |
| Example 5 | rCB1 | 1000 | 3.00 | - | - |
| Example 6 | rCB1 | 1000 | 3.00 | 1000 | 0.60 |
| Example 7 | rCB1 | 1000 | 3.00 | 1000 | 1.80 |
| Example 8 | rCB1 | 1000 | 6.00 | 1000 | 1.80 |
| Example 9 | rCB1 | 1000 | 6.00 | 1000 | 1.80 |

**[Table 2]**

| | N₂SA (m²/g) | G band intensity | E' (MPa) | M300 (kgf/cm²) |
|---|---|---|---|---|
| rCB1 | 78 | 113 | 3.7 | 87 |
| Comparative Example 1 | 45 | 112 | 3.2 | 82 |
| Comparative Example 2 | 90 | 112 | 3.6 | 86 |
| Comparative Example 3 | 273 | 89 | 4.0 | 89 |
| Comparative Example 4 | 40 | 112 | 3.3 | 72 |
| Comparative Example 5 | 110 | 80 | 3.8 | 85 |
| Comparative Example 6 | 50 | 79 | 3.5 | 86 |
| Reference Example 1 | 79 | 99 | 6.0 | 105 |
| Reference Example 2 | 119 | 99 | 6.5 | 110 |
| Example 1 | 100 | 106 | 4.7 | 101 |
| Example 2 | 120 | 100 | 5.2 | 103 |
| Example 3 | 162 | 94 | 5.3 | 102 |
| Example 4 | 202 | 94 | 6.3 | 105 |
| Example 5 | 243 | 90 | 7.2 | 103 |
| Example 6 | 223 | 95 | 8.2 | 100 |
| Example 7 | 146 | 92 | 5.9 | 110 |
| Example 8 | 85 | 97 | 5.9 | 101 |
| Example 9 | 102 | 96 | 6.1 | 101 |

**[Table 3]**

| Blended component | Blended amount (part(s) by mass) |
|---|---|
| Natural rubber (RSS #1) | 100 |
| Carbon black | 45 |
| Stearic acid | 3 |
| Antioxidant | 1 |
| Zinc oxide | 4 |
| Vulcanization accelerator | 0.5 |
| Sulfur | 1.5 |

Examples 1 to 9 had E' as high as 4.7 MPa or more. On the other hand, rCB1 and Comparative Examples 1 to 6 had E' as low as 4.0 MPa or less. Thus, it has been found that the modified recycled carbon blacks of Examples 1 to 9 have strong bonding with the rubber component and can increase reinforcing properties for the rubber composition.

In addition, it has been found that Examples 1 to 9, having an M300 of 100 kgf/cm² or more, can increase M300 as well.

### INDUSTRIAL APPLICABILITY

The present invention can provide a new recycled carbon black having strong bonding with rubber components and having high reinforcing properties for rubber products and can thus produce rubber products having performance equivalent to that of unused carbon black using a recycled carbon black obtained by pyrolyzing rubber products such as waste tires.

### REFERENCE SIGNS LIST

- 1: FLUIDIZED-BED REACTOR
- 2: REACTOR MAIN BODY
- 3: HEATER COIL
- 4: STIRRING AREA
- 5: FILTER
- 21: GAS INLET
- 22: EXHAUST PORT

## Claims

1. A modified recycled carbon black
having a N₂SA of 50 m²/g or more and 250 m²/g or less, and
having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less.

2. The modified recycled carbon black according to claim 1, wherein an ash content is 3.0% or more and 50.0% or less.

3. A modified recycled carbon black obtained by performing a step of bringing an oxidative gas into contact with a rubber carbide-adhering recycled carbon black in a reactor heated at 600°C or higher and 1,400°C or lower,
having a N₂SA of 50 m²/g or more and 250 m²/g or less, and
having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less.

4. A modified recycled carbon black obtained by performing a step of bringing an oxidative gas into contact with a rubber carbide-adhering recycled carbon black in a reactor heated at 600°C or higher and 1,400°C or lower and a step of bringing a hydrocarbon gas into contact with the rubber carbide-adhering recycled carbon black in the reactor,
having a N₂SA of 50 m²/g or more and 250 m²/g or less, and
having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 84 or more and 111 or less.

5. The modified recycled carbon black according to claim 3 or 4, wherein the rubber carbide-adhering recycled carbon black is a carbon black having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more and 200 or less.

6. A method for producing a modified recycled carbon black, the method comprising a step of bringing an oxidative gas into contact with a rubber carbide-adhering recycled carbon black in a reactor heated at 600°C or higher and 1,400°C or lower.

7. A method for producing a modified recycled carbon black, the method comprising a step of bringing an oxidative gas into contact with a rubber carbide-adhering recycled carbon black in a reactor heated at 600°C or higher and 1,400°C or lower and a step of bringing a hydrocarbon gas into contact with the rubber carbide-adhering recycled carbon black in the reactor.

8. The method for producing a modified recycled carbon black according to claim 7, wherein, after performing the step of bringing an oxidative gas into contact, the step of bringing a hydrocarbon gas into contact is performed.

9. The method for producing a modified recycled carbon black according to claim 6 or 7, wherein the rubber carbide-adhering recycled carbon black is a carbon black having, in a Raman spectrum obtained by performing measurement at an excitation wavelength of 532 nm by laser Raman spectroscopy, a peak intensity of a peak having a peak top in a range of 1,580 ± 20 cm⁻¹, with the peak intensity of a peak having a peak top in a range of 1,350 ± 20 cm⁻¹ being 100, of 112 or more and 200 or less.

10. A rubber composition comprising:
a rubber component; and
the modified recycled carbon black according to claim 1 in an amount of 1 part by mass or more and 100 parts by mass or less with respect to 100 parts by mass of the rubber component.
